# EUROPEAN PATENT SPECIFICATION

(11) **EP 1 695 608 B1**
(45) Date of publication and mention of the grant of the patent: **09.12.2009**
(21) Application number: 06250748.8
(22) Date of filing: 10.02.2006
(51) Int. Cl.: A01D 34/00, A01D 34/82

(54) **A lawn mower**
Ein Rasenmäher
Une tondeuse à gazon

(30) Priority: 25.02.2005 GB 0503822
(43) Date of publication of application: 30.08.2006
(73) Proprietor: Power Box AG, 6301 Zug (CH)
(72) Inventor: Park, Keith, Pocklington York YO42 2QN (GB)
(74) Representative: Tomkinson, Alexandra

(56) References cited:
- EP-A- 1 512 319
- GB-A- 2 328 359
- US-A- 3 357 716
- US-A- 3 534 432
- US-A- 3 874 151
- US-A- 5 209 051

## Description

This invention relates to a lawn mower.

Lawn mowers have conventionally been stored in garden sheds, outhouses, garages and/or the like. They typically take up a large amount of space and are unsightly. Furthermore, once lawn mowers have been used, they typically pick up grass cuttings, mud and/other debris on the exterior surfaces thereof which subsequently falls off with time, thereby leaving a mess in the location in which the lawn mower is stored. In addition, lawn mowers are not generally easily transportable due to their size and shape.

US3357716 discloses a handle construction for a lawn mower wherein the handle construction can be folded onto an upper surface of the mower body when the mower is not in use.

It is therefore an aim of the present invention to provide a lawn mower which is more easily transportable and which can be stored easily when not in use.

According to the present invention there is provided a lawn mower, said lawn mower including a body portion having cutting means associated therewith and handle means connected to the body portion for allowing a user to move the lawn mower in a required direction in use, and wherein the handle mean are movable between a first in use position and a second collapsed position, **characterised in that** in said second position at least part of the handle means are located adjacent an underside surface of a base of said body portion.

In the second collapsed condition, the lawn mower is more easily transportable, is compact and therefore takes up less space and can be more easily stored.

Preferably the handle means are movable about at least two separate pivot points and/or arc capable of undergoing at least two separate movement stages in order to move the handle means between said first and second positions.

Preferably the handle means are movably mounted on the body portion of the lawn mower. This mounting typically allows, at least in part, the handle means to be moved from the first in use position to the second collapsed position.

The handle means can include at least first and second parts, the first part movable with respect to the second part to allow, at least in part, the handle means to be moved between said first and second positions.

Preferably the handle means are rotatably or pivotally mounted on the body portion of the lawn mower. Preferably the at least first and second parts are rotatably or pivotally movable with respect to each other.

Thus, in one embodiment of the present invention, the handle means can include at least two pivot points; a first pivot point about which the handle means are movable with respect to the body portion, and a second pivot point about which a first part of the handle is movable with respect to a second part of the handle.

Preferably the handle means are capable of movement approximately between 0-90 degrees with respect to the body portion of the mower.

Preferably the first part of the handle means is capable of movement approximately between 0-180 degrees with respect to the second part of the handle means.

Preferably the handle means are at least partially folded when moved to the second collapsed position.

The movement means allowing movement of the handle parts or handle means with respect to the body portion can include any or any combination of a conventional type of folding mechanism, such as for example one or more hinges, rollers, ball bearings, ratchet mechanisms, screws, rotatable members and/or the like.

The body portion typically has an upper surface and a base. In the first position, the handle means typically protrudes outwardly from an upper surface of said body portion or base. In one embodiment at least a part of the handle means can be folded or moved to a position adjacent or parallel to the base of the body portion in the second position. In one embodiment at least a part of the handle means can be folded underneath the lawn mower, thereby significantly decreasing the space taken up by the mower in the second collapsed position.

With the handle means in the second collapsed position, at least part of the handle means are substantially parallel with the base of the body portion.

In one optional embodiment tray means are associated with the handle means and the tray means are typically moved with the handle means between the first in use condition and the second collapsed condition.

The tray means are preferably moved adjacent to and substantially parallel with an underside surface of the base of the lawn mower in the second collapsed position to form a cover for the base of the mower. This has the advantage that it protects a user or other objects from contacting the cutting means, which are typically accessible via the base of the mower, when the mower is not in use. In addition, the tray collects any debris, mud, grass cuttings and/or the like which may fall from or be attached to the base of the mower.

One or more locking mechanisms can be associated with the body portion, folding means, movement means, handle means and/or the tray means to allow the handle means and/or tray means to be locked in said first and/or second positions. The locking mechanism can include any or any combination of one or more catches, screws, nuts and bolts, hooks, ties, inter-engaging members, friction fit and/or the like.

Preferably the tray means is in the form of a plate like member with a flange or skirt member around a peripheral edge thereof. The tray means is associated with the handle means in such a way that when the handle means are in the second collapsed position, the flange or skirt member of the tray means engages with or is provided adjacent the side walls of the body portion.

In one embodiment the tray means are associated with the handle means in such a way that the flange or skirt member of the tray means faces away from the body portion of the mower, typically towards the user with the handle means in the first position. The free edge of the flange or skirt member typically protrudes towards said upper surface of the body portion when the tray means is located in the second position adjacent the underside surface of the base of the body portion.

The at least first and second parts of the handle means typically correspond to at least upper and lower parts and the tray means is typically associated with the upper part of the handle means (i.e., the part furthest from the body portion of the mower). As such, when the mower is in the second position, the upper part of the handle means, and thus the tray means, is provided adjacent the underside surface of the base of the mower.

Preferably the handle means includes at least one elongate frame member and the tray means is associated with the same. Further preferably the handle means includes at least two elongate frame members, such as for example substantially parallel frame members, and the tray means are provided between said frame members.

In one embodiment the tray means protrudes from one or more edges of said frame members.

In whichever embodiment, the dimensions of the tray means are typically such so as to cover at least the cutting means provided on the base of the mower and preferably substantially all the base of the mower in said second position.

The handle means typically include one or more gripping portions and said gripping portions are typically used to carry the mower when in the second position. The gripping portions are typically the same gripping portions used by the user to grip the handle means in the first in use position.

Preferably the gripping portions protrude from a front edge of the mower when in the second collapsed position, thereby allowing the same to be used as a handle by a user. In one embodiment gripping portions or other handle means can protrude from a side or rear of the mower to allow carrying of the mower in the second position.

The tray means can be integrally formed with the handle means, attached or detachably attached to the handle means as required.

The tray means can be provided with one or more recesses and/or compartments to allow the storage of one or more items, such as tools, electrical cable and/or the like therein.

The lawn mower can include any rotary type mower, hover mower, vegetation cutter and/or the like and can be electrically powered, fuel powered or manually powered. If the lawn mower is a powered mower, the body portion can include one or more fuel reservoirs, motor, drive mechanisms and/or the like.

An embodiment of the present invention will now be described with reference to the accompanying figures, wherein:
Figures 1a and 1b are a perspective view and side view of a lawn mower according to the present invention in one embodiment in an in use condition respectively;
Figures 2a and 2b are a perspective view and side view of the lawn mower in figure 1 when in a second collapsed condition respectively;

Referring to the figures, there is illustrated a hover lawn mower 2 having a body portion 4 and handle means 6. Body portion 4 includes a base 8, side walls 10 and a top surface 12. A motor housing 14 is also provided as part of body portion 4 and housing 14 is located on top surface 12. The shape and configuration of the body portion and motor housing can be in any suitable shape, colour, size and/or design as required.

Grass cutting blades (not shown) are typically provided adjacent the base 8 of the body portion 4, such that as body portion 4 is moved across a grass surface in use, the cutting blades cut the grass. Since the mower shown in the illustrations is a hover mower, air flow means are also provided in body portion and/or motor housing 14. The air flow means allows the hover means to be lifted a pre-determined distance off the ground in use and to allow movement of the mower across the ground surface. Although a grass cutting receptacle is not shown in the illustrations, it will be appreciated that a receptacle can be provided with the mower if required.

The handle means 6 include two elongate arm members 16, 18 which are joined at first ends 20, 22 to upper surface 12 of body portion 4 and at second ends 24, 26 to each other via connection member 28.

More specifically, each arm member 16, 18 includes lower and upper arm portions 30, 32 and 34, 36 respectively. Ends 20, 22 of lower arm portions 30, 34 are rotatably mounted to body portion 4. This rotatable mounting typically includes an aperture defined in arm portions 30, 34 which rotates about a spindle or shaft provided on body portion 4. A locking nut 38 can be provided to prevent the arm portions from falling off the shaft in use. The mounting can allow any suitable amount of movement and, in one example, arm portions 30, 34 can rotate between 0-90 degrees with respect to the body portion. However, the arm portions 30, 34 must at least be movable from an acute angle with respect to base 8 to a position substantially parallel and adjacent to base 8.

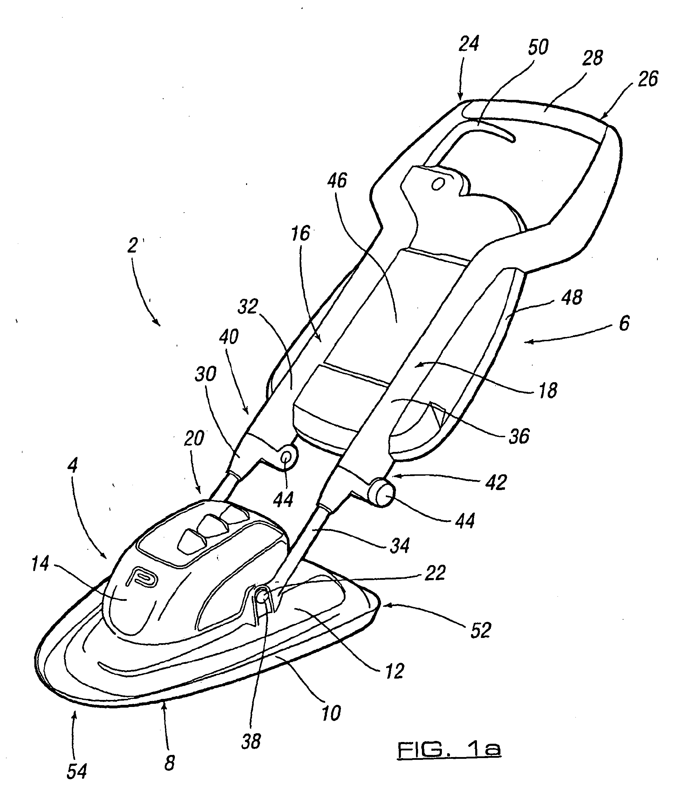

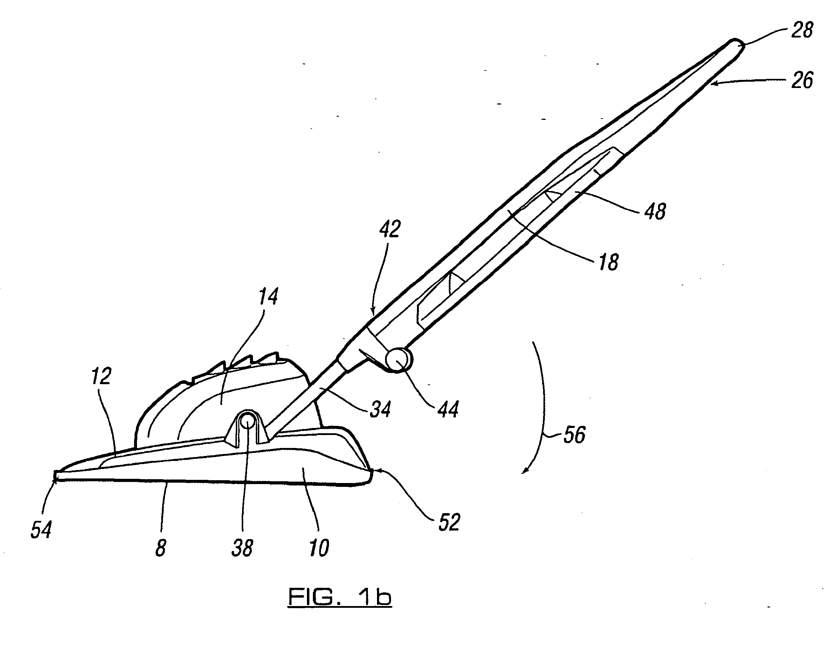

The upper ends of lower arm portions 30, 34 opposite to lower ends 20, 22 are hingedly joined to lower ends 40, 42 of upper arm portions 32, 36. Locking screws 44 are provided to lock the hinges in a first in use position, wherein the lower and upper arm portions 30, 32 and 34, 36 are axially aligned, fixed in relation to each other and substantially continuous in length, as shown in figure 1a. Rotation of the locking screws in a suitable direction unlocks the same and allows upper arm portions 32, 36 to be moved relative to lower arm portions 30, 34 to allow folding of the arm members, as shown in figure 1b.

A tray member 46 is provided between upper arm portions 32, 36. More specifically, tray member 46 has a portion extending between the arm portions and portions extending either side of the arm portions. The tray member can be an integrally formed one piece member or can include a number of parts. Furthermore, the tray member can be integrally formed with upper arm portions 32, 36, or can be detachably or fixedly attached thereto by suitable attachment means. Tray member 46 has a flange 48 around a peripheral edge thereof which protrudes away from the front of lawn mower 2.

Connection member and ends 24, 26 of upper arm portions 32, 36 typically define gripping portions to allow a user to grip the handles in use. User actuation means in the form of actuation lever 50 are provided adjacent the gripping portions to allow a user to manipulate the same in use to move the lawn mower between on and off conditions.

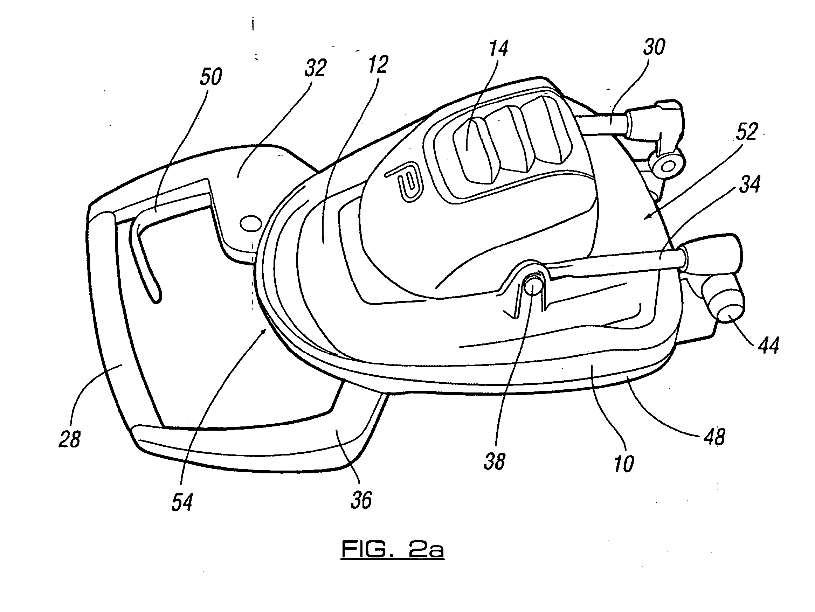

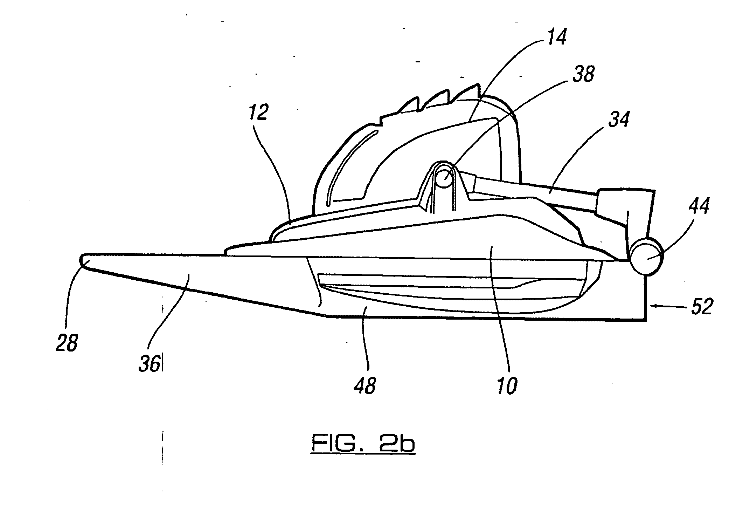

In accordance with the present invention, the handle means 6 are movable between a first in use position, as shown in figures 1a and 1b, to a second collapsed position, as shown in figures 2a and 2b. In order to fold the handle means, one pivotal stage includes lower arm portions 30, 32 being rotated/pivoted relative to body portion 4, such that the upper ends of the lower arm portions opposite to ends 20, 22 are facing towards the rear 52 of the mower and the lower arm portions are substantially parallel to top surface 12.

The second pivotal stage includes locking screws 44 being moved to an unlocked position, thereby allowing upper arm portions 32, 36 to be pivoted relative to lower arm portions 30, 34, through approximately 180 degrees to a folded position. This pivotal movement is typically in a direction towards the front 54 of mower 2, as shown by arrow 56. The locking screws 44 can then be moved to a locked position to maintain the handle means in a folded position until use of the mower is required.

In the folded position, upper arm portions 32, 36 are typically provided parallel to and a spaced distance apart from arm portions 30, 34. More particularly, arm portions 32, 36 are folded underneath or adjacent the underside of base 8 of mower 2. The tray member 46 is positioned in such a location with respect to upper arm portions 32, 36 that in a folded condition, tray member 46 engages or is provided adjacent base 8. Flange 48 of tray member 46 typically engages against or is provided adjacent side walls 10. Thus, tray member 46 prevents access to the cutting blades in the folded condition, it collects any dirt or debris falling from the base of the lawnmower following use and also provides a compact, aesthetically pleasing unit which can be easily stored and transported.

The gripping portions protrude from the front 54 of the mower when in the folded condition, thereby allowing a user to easily carry and transport the folded mower assembly.

## Claims

1. A lawn mower (2), said lawn mower including a body portion (4) having cutting means associated therewith and handle means (6) connected to the body portion for allowing a user to move the lawn mower in a required direction in use, and wherein the handle means (6) are movable between a first in use position and a second collapsed position, **characterised in that** in said second position at least part of the handle means (6) are located adjacent an underside surface of a base (8) of said body portion (4).

2. A lawn mower according to claim 1 wherein the handle means (6) are movably mounted to the body portion (4) of the mower (2).

3. A lawn mower according to claim 1 wherein the handle means (6) includes at least first and second parts, at least the first part movable with respect to said second part to allow, at least in part, the handle means (6) to be moved between said first and second positions.

4. A lawn mower according to claims 2 or 3 wherein the movement of the handle means (6) with respect to the body portion (4) and/or the movement of the at least first and second parts of said handle means is rotatable and/or pivotable movement.

5. A lawn mower according to claim 1 wherein the handle means (6) includes at least two pivot points; a first pivot point about which the handle means are movable with respect to the body portion (4) of the mower, and a second pivot point about which a first part of the handle means (6) is movable with respect to a second part of the handle means.

6. A lawn mower according to claim 1 wherein the handle means (6) are capable of movement approximately between 0-90 degrees with respect to the body portion (4) of the mower.

7. A lawn mower according to claim 3 wherein the first part of the handle means is capable of movement approximately between 0-180 degrees with respect to the second part of the handle means.

8. A lawn mower according to claim 4 wherein the movement means includes any or any combination of one or more hinges, rollers, ball bearings, ratchet mechanism, screws or rotatable members.

9. A lawn mower according to claim 1 wherein tray means (46) are associated with said handle means (6) and arc movable with said handle means between said first and second positions.

10. A lawn mower according to claim 9 wherein the tray means (46) are movable to a position adjacent to the underside surface of the base (8) of said body portion (4) in said second position.

11. A lawn mower according to any preceding claim wherein locking means (38,44) arc associated with said movement means, said handle means (6), said body portion (4) and/or tray means (46) associated with said handle means (6) to allow the handle means to be locked in said first and/or second positions.

12. A lawn mower according to claim 11 wherein the locking means (38, 44) includes any or any combination of one or more catches, nuts and bolts, screws, hooks, ties, inter-engaging members or friction fit.

13. A lawn mower according to claim 9 wherein the tray means (46) is in the form of a plate like member with a flange (48) or skirt member provided around a peripheral edge thereof.

14. A lawn mower according to claim 13 wherein the flange (48) or skirt member is arranged so that with the handle means (6) and tray means (46) in the second position, the flange (48) or skirt member engages with or is provided adjacent side walls (10) of the body portion (4) of the lawn mower.

15. A lawn mower according to claim 3 wherein the first and second parts of the handle means (6) correspond to upper (32, 36) and lower (30,34) parts and tray means (46) are associated with the upper part (32, 36) of the handle means, said upper part being furthest from the body portion (4) of the lawn mower.

16. A lawn mower according to claim 9 wherein the handle means (6) includes at least two substantially parallel frame members (16, 18) and the tray means (46) are provided between said frame members.

17. A lawn mower according to any preceding claim wherein the handle means (6) includes one or more gripping portions and said gripping portions are used to carry the mower when in the second position.

18. A lawn mower according to claim 17 wherein at least part of said gripping portions protrudes from a front edge (54) of said mower when in the second position.

19. A lawn mower according to claim 9 wherein the tray means (46) includes one or more recesses and/or compartments for the location of one or more items.

20. A lawn mower according to any preceding claim wherein user actuation means (50) arc provided on the handle means (6) for actuating the lawn mower (2) and said actuation means are provided on an upper part (32, 36) of said handle means.

## Patentansprüche

1. Rasenmäher (2), wobei der genannte Rasenmäher einen Gehäuseteil (4) mit damit assoziierten Schneidmitteln und Griffmittel (6) aufweist, die mit dem Gehäuseteil verbunden sind, damit ein Benutzer den Rasenmäher im Gebrauch in einer gewünschten Richtung bewegen kann, und wobei die Griffmittel (6) zwischen einer ersten Gebrauchsstellung und einer zweiten zusammengeklappten Stellung bewegt werden können, **dadurch gekennzeichnet, dass** sich in der genannten zweiten Stellung wenigstens ein Teil der Griffmittel (6) neben einer unterseitigen Fläche eines Grundteils (8) des genannten Gehäuseteils (4) befindet.

2. Rasenmäher nach Anspruch 1, bei dem die Griffmittel (6) beweglich an dem Gehäuseteil (4) des Mähers (2) angebracht sind.

3. Rasenmäher nach Anspruch 1, bei dem das Griffmittel (6) wenigstens einen ersten und einen zweiten Teil aufweist, wobei wenigstens der erste Teil in Bezug auf den genannten zweiten Teil beweglich ist, damit das Griffmittel (6) wenigstens teilweise zwischen der genannten ersten und der genannten zweiten Stellung bewegt werden kann.

4. Rasenmäher nach Anspruch 2 oder 3, bei dem die Bewegung der Griffmittel (6) in Bezug auf den Gehäuseteil (4) und/oder die Bewegung des wenigstens einen ersten und zweiten Teils der genannten Griffmittel eine Dreh- und/oder Schwenkbewegung ist.

5. Rasenmäher nach Anspruch 1, bei dem das Griffmittel (6) wenigstens zwei Drehpunkte aufweist: einen ersten Drehpunkt, um den die Griffmittel in Bezug auf das Gehäuseteil (4) des Mähers beweglich sind, und einen zweiten Drehpunkt, um den ein erster Teil der Griffmittel (6) in Bezug auf einen zweiten Teil der Griffmittel beweglich ist.

6. Rasenmäher nach Anspruch 1, bei dem die Griffmittel (6) in Bezug auf das Gehäuseteil (4) des Mähers etwa zwischen 0 - 90 Grad beweglich sind.

7. Rasenmäher nach Anspruch 3, bei dem der erste Teil der Griffmittel in Bezug auf den zweiten Teil der Griffmittel etwa zwischen 0 - 180 Grad beweglich ist.

8. Rasenmäher nach Anspruch 4, bei dem das Bewegungsmittel beliebig wenigstens eines der Folgenden oder eine beliebige Kombination dieser aufweist: Scharniere, Rollen, Kugellager, Gesperre, Schrauben oder drehbare Elemente.

9. Rasenmäher nach Anspruch 1, bei dem mit den genannten Griffmitteln (6) Schalenmittel (46) assoziiert sind und mit den genannten Griffmitteln zwischen der genannten ersten und der genannten zweiten Stellung beweglich sind.

10. Rasenmäher nach Anspruch 9, bei dem die Schalenmittel (46) auf eine Position neben der unterseitigen Fläche der Basis (8) des genannten Gehäuseteils (4) in der genannten zweiten Stellung bewegt werden können.

11. Rasenmäher nach einem der vorhergehenden Ansprüche, bei dem Sperrmittel (38, 44) mit den genannten Bewegungsmitteln, den genannten Griffmitteln (6), dem genannte Gehäuseteil (6) und/oder den mit den genannten Griffmitteln (6) assoziierten Schalenmitteln (46) assoziiert sind, damit die Griffmittel in der genannten ersten und/oder zweiten Stellung arretiert werden können.

12. Rasenmäher nach Anspruch 11, bei dem das Sperrmittel (38,44) ein beliebiges oder eine beliebige Kombination der Folgenden aufweist: eine oder mehrere Arretierungen, Muttern und Bolzen, Schrauben, Haken, Binder, ineinander greifende Elemente oder reibschlüssige Verbindung.

13. Rasenmäher nach Anspruch 9, bei dem das Schalenmittel (46) die Form eines plattenähnlichen Elements mit einem um einen peripheren Rand davon bereitgestellten Flansch (48) oder Randelement hat.

14. Rasenmäher nach Anspruch 13, bei dem der Flansch (48) oder das Randelement so angeordnet ist, dass der Flansch (48) oder das Randelement bei in der zweiten Stellung befindlichen Griffmitteln (6) und Schalenmitteln (46) mit Seitenwänden (10) des Gehäuseteils (4) des Rasenmähers in Eingriff kommt oder neben ihnen bereitgestellt ist.

15. Rasenmäher nach Anspruch 3, bei dem der erste und der zweite Teile des Griffmittels (6) oberen (32, 36) und unteren (30, 34) Teilen entsprechen und Schalenmittel (46) mit dem oberen Teil (32, 36) des Griffmittels assoziiert sind, wobei der genannte obere Teil am weitesten von dem Gehäuseteil (4) des Rasenmähers entfernt ist.

16. Rasenmäher nach Anspruch 9, bei dem das Griffmittel (6) wenigstens zwei im Wesentlichen parallele Rahmenelemente (16, 18) aufweist und die Schalenmittel (46) zwischen den genannten Rahmenelementen bereitgestellt sind.

17. Rasenmäher nach einem der vorhergehenden Ansprüche, bei dem das Griffmittel (6) einen oder mehrere Griffstücke aufweist und die genannten Griffstücke zum Tragen des Mähers verwendet werden, wenn er sich in der zweiten Stellung befindet.

18. Rasenmäher nach Anspruch 17, bei dem in der zweiten Stellung wenigstens ein Teil der genannten Griffstücke von einem vorderen Rand (54) des genannten Mähers vorspringt.

19. Rasenmäher nach Anspruch 9, bei dem das Schalenmittel (46) wenigstens eine Aussparung und/oder ein Fach zur Aufnahme von einem oder mehreren Artikeln aufweist.

20. Rasenmäher nach einem der vorhergehenden Ansprüche, bei dem an dem Griffmittel (6) Benutzerbetätigungsmittel (50) zum Betätigen des Rasenmähers (2) bereitgestellt sind und die genannten Betätigungsmittel an einem oberen Teil (32, 36) des genannten Griffmittels bereitgestellt sind.

## Revendications

1. Tondeuse à gazon (2), ladite tondeuse à gazon comportant une section corps (4) avec des moyens de coupe associés à celle-ci et des moyens de poignée (6) raccordés à la section corps pour permettre à un utilisateur de déplacer la tondeuse à gazon suivant un sens requis pendant son utilisation, et les moyens de poignée (6) pouvant être déplacés entre une première position d'utilisation et une deuxième position repliée, **caractérisée en ce que** dans ladite deuxième position une partie au moins des moyens de poignée (6) est disposée en position adjacente à une surface inférieure d'une base (8) de ladite section corps (4).

2. Tondeuse à gazon selon la revendication 1, les moyens de poignée (6) étant montés de façon mobile sur la section corps (4) de la tondeuse (2).

3. Tondeuse à gazon selon la revendication 1, les moyens de poignée (6) incluant au moins une première et une deuxième parties, la première partie au moins étant mobile par rapport à ladite deuxième partie, afin de permettre, tout au moins en partie, aux moyens de poignée (6) d'être déplacés entre lesdites première et deuxième positions.

4. Tondeuse à gazon selon les revendications 2 ou 3, le mouvement des moyens de poignée (6) par rapport à la section corps (4) et/ou le mouvement desdites au moins première et deuxième parties desdits moyens de poignée étant un mouvement rotatif et/ou pivotable.

5. Tondeuse à gazon selon la revendication 1, les moyens de poignée (6) incluant au moins deux points de pivotement : un premier point de pivotement autour duquel les moyens de poignée peuvent être déplacés par rapport à la section corps (4) de la tondeuse, et un deuxième point de pivotement autour duquel une première partie des moyens de poignée (6) peut être déplacée par rapport à une deuxième partie des moyens de poignée.

6. Tondeuse à gazon selon la revendication 1, les moyens de poignée (6) étant aptes à effectuer un mouvement situé approximativement entre 0 et 90 degrés par rapport à la section corps (4) de la tondeuse.

7. Tondeuse à gazon selon la revendication 3, la première partie des moyens de poignée (6) étant apte à effectuer un mouvement situé approximativement entre 0 et 180 degrés par rapport à la deuxième partie des moyens de poignée.

8. Tondeuse à gazon selon la revendication 4, les moyens de mouvement comportant l'un quelconque des postes ou n'importe quelle combinaison d'un ou de plusieurs postes, à savoir : charnières, rouleaux, roulements à billes, mécanisme à rochet, vis ou éléments rotatifs.

9. Tondeuse à gazon selon la revendication 1, des moyens de plateau (46) étant associés auxdits moyens de poignée (6) et pouvant être déplacés avec lesdits moyens de poignée entre lesdites première et deuxième positions.

10. Tondeuse à gazon selon la revendication 9, les moyens de plateau (46) pouvant être déplacés vers une position qui est adjacente à la surface inférieure de la base (8) de ladite section corps (4) dans ladite deuxième position.

11. Tondeuse à gazon selon l'une quelconque des revendications précédentes, des moyens de verrouillage (38, 44) étant associés auxdits moyens de mouvement, auxdits moyens de poignée (6), à ladite section corps (4) et/ou auxdits moyens de plateau (46) associés auxdits moyens de poignée (6), afin de permettre le verrouillage des moyens de poignée (6) dans lesdites première et deuxième positions.

12. Tondeuse à gazon selon la revendication 11, les moyens de verrouillage (38, 44) comportant l'un quelconque des postes ou n'importe quelle combinaison d'un ou de plusieurs postes, à savoir : loquets, écrous et boulons, vis, crochets, attaches, éléments d'inter-engagement ou ajustement par friction.

13. Tondeuse à gazon selon la revendication 9, les moyens de plateau (46) se présentant sous la forme d'un élément semblable à une plaque alors qu'une bride (48) ou un élément de jupe est prévu autour d'un bord périphérique de celui-ci.

14. Tondeuse à gazon selon la revendication 13, la bride (48) ou l'élément de jupe étant agencé de sorte que si les moyens de poignée (6) et les moyens de plateau (46) se trouvent dans la deuxième position, la bride (48) ou l'élément de jupe va s'engager avec les parois latérales (10) de la section corps (4), ou se trouve en position adjacente à celles-ci.

15. Tondeuse à gazon selon la revendication 3, les première et deuxième parties des moyens de poignée (6) correspondant aux parties supérieure (32, 36) et inférieure (30, 34), alors que les moyens de plateau (46) sont associés à la partie supérieure (32, 36) des moyens de poignée, ladite partie supérieure étant la plus éloignée de la section corps (4) de la tondeuse à gazon.

16. Tondeuse à gazon selon la revendication 9, les moyens de poignée (6) comportant au moins deux éléments de cadre (16, 187) sensiblement parallèles et les moyens de plateau (46) étant montés entre lesdits éléments de cadre.

17. Tondeuse à gazon selon l'une quelconque des revendications précédentes, les moyens de poignée (6) comportant une ou plusieurs sections de préhension, et lesdites sections de préhension étant utilisées pour transporter la tondeuse quand elle se trouve dans la deuxième position.

18. Tondeuse à gazon selon la revendication 17, une partie au moins desdites sections de préhension se projetant à partir d'un bord frontal (54) de ladite tondeuse quand elle se trouve dans la deuxième position.

19. Tondeuse à gazon selon la revendication 9, les moyens de plateau (46) comportant un ou plusieurs évidements et/ou compartiments pour y mettre un ou plusieurs articles.

20. Tondeuse à gazon selon l'une quelconque des revendications précédentes, des moyens d'actionnement (50) d'utilisateur étant prévus sur les moyens de poignée (6) afin d'actionner la tondeuse à gazon (2) et lesdits moyens d'actionnement étant montés sur une partie supérieure (32, 36) desdits moyens de poignée.
